# FASCICULE DE BREVET EUROPEEN

(11) **EP 0 664 728 B1**
(45) Date de publication et mention de la délivrance du brevet: **12.03.1997**
(21) Numéro de dépôt: 93922982.9
(22) Date de dépôt: 13.10.1993
(51) Int. Cl.: B01D 53/34

(54) **PROCEDES DE TRAITEMENT DES RESIDUS DE COMBUSTION ET DE L'EPURATION DES FUMEES DE COMBUSTION**
VERFAHREN ZUM BEHANDLUNG VON VERBRENNUNGSRÜCKSTÄNDEN UND REINIGUNG VON VERBRENNUNGSABGASEN
PROCESSES FOR THE TREATMENT OF COMBUSTION RESIDUES AND PURIFICATION OF COMBUSTION EMISSIONS

(30) Priorité: 15.10.1992 FR 9212622
(43) Date de publication de la demande: 02.08.1995
(73) Titulaire: LAB S.A., F-69003 Lyon (FR)
(72) Inventeur: VICARD, Jean-François, F-69002 Lyon (FR)
(74) Mandataire: Monnier, Guy
(86) Numéro de dépôt international: FR9301010
(87) Numéro de publication internationale: WO9408699

(56) Documents cités:
- EP-A- 0 304 412
- EP-A- 0 381 601
- WO-A-87/03215
- FR-A- 2 547 210
- DATABASE WPI Section Ch, Week 8341, Derwent Publications Ltd., London, GB; Class J01, AN 83-785432 & JP,A,58 146 484 (SEITETSU CHEM IND KK) 1 Septembre 1983

## Description

### DOMAINE DE L'INVENTION

La présente invention se réfère aux procédés d' incinération et/ou de combustion de combustibles solides et/ou liquides et plus particulièrement au traitement des résidus solides générés par de tels procédés sous forme de mâchefers et de cendres volantes.

### ETAT DE L'ART

Par exemple lors de l'incinération des ordures ménagères, il est généré par tonne d'ordures ménagères environ 250 kg de mâchefers et 25 kg de cendres volantes entraînées par les fumées. Dans d'autres procédés de combustion la quantité de résidus dépend du combustible utilisé et la proportion mâchefer/cendre volante dépend du type de combustion. L'expérience montre que les mâchefers, bien que quasi-vitrifiés, sont plus ou moins enrobés de composés solubles, par exemple chlorures et alkalins solubles dans le cas de l'incinération d'ordures ménagères. La trempe des mâchefers dans la fosse à mâchefer vise simplement au refroidissement de ces mâchefers mais pas à leur lavage ; on se contente le plus souvent de faire dans la fosse à mâchefer un appoint d'eau pour compenser l'évaporation et l'humidité résiduelle des mâchefers. Dans les très rares cas où on a pu utiliser un débit d'eau élevé pour laver les mâchefers, ces derniers ont alors présenté de bonnes qualités en vue de leur valorisation. Par ailleurs dans le cas des usines d'incinération d'ordures ménagères on sait par des procédés connus "déférailler" les mâchefers et les concasser/cribler pour leur donner une granulométrie les rendant potentiellement aptes à une valorisation comme matériau de sousbassement routier ou comme matériau de construction. Pour que cette valorisation soit réellement possible, il est nécessaire qu'en présence d'eau il n'y ait pas de relargage significatif d'éléments solubles. De bonnes performances sont donc nécessaires lors d'un test de lixiviation. Elles seraient possibles en utilisant les procédés connus de lavage. Mais cela impliquerait une consommation d'eau élevée.

De même les cendres volantes comportent très souvent une proportion importante pouvant atteindre 30% de composés facilement solubles dont des métaux lourds. Il est donc nécessaire de les traiter avant de pouvoir les stocker définitivement en décharge ou les valoriser.

Différents procédés ont été proposés pour un tel traitement. Par exemple dans le cas des usines d'incinération on trouve souvent en aval du four d'incinération et de la chaudière de récupération un électrofiltre assurant la captation des cendres volantes suivi d'une épuration humide assurant la captation des gaz acides HCl, HF en particulier. Il a été proposé d'utiliser la purge acide d'une telle épuration humide pour traiter les cendres volantes par lixiviation en phase acide. L'inconvénient d'une telle méthode est - outre la mise en oeuvre d'une installation extérieure complexe - l'utilisation d'un liquide riche en métaux lourds solublisés et en éléments trâcecaptés dans l'épuration humide. Il n'est pas alors possible sans forte consommation d'eau d'obtenir de bonnes propriétés de lixiviation du résidu traité, en particulier vis à vis de la fraction soluble totale.

Il a aussi été proposé d'introduire ces cendre volantes dans le liquide recyclé du laveur assurant la captation des gaz acides. Dans cette méthode il n'est pas nécessaire de mettre en oeuvre une installation extérieure complexe, mais compte-tenu des caractéristiques du liquide de lavage, il n'est aussi pas possible sans forte consommation d'eau d'obtenir de bonnes propriétés de lixiviation du résidu traité, en particulier, vis à vis de la fraction soluble totale.

La présente invention vise à supprimer les inconvénients des méthodes connues et à utiliser judicieusement une faible quantité d'eau et/ou de réactifs et plus particulièrement à utiliser judicieusement l'eau d'appoint nécessaire au fonctionnement de la dite épuration humide des fumées de combustion lorsque les résidus proviennent d'une installation de combustion équipée d'une épuration humide des fumées. Pour cela les résidus à traiter sont mis en contact avec un liquide de lavage dans un bac agité puis envoyés sous forme de liquide chargé vers un dispositif de deshydratation. Les résidus ainsi lavés et filtrés sont ensuite rincés avec un ou plusieurs liquides de rinçage. Suivant l'invention, le procédé de traitement est caractérisé en ce que
a) le ou les liquide(s) de rinçage sont dirigés, après utilisation dans le dispositif de deshydratation, vers le bac de lavage
b) le filtrat provenant de la déshydratation des résidus lavés est principalement dirigé vers le bac de lavage, l'autre partie étant dirigée vers l'épuration humide des fumées de combustion en substitution à l'eau d'appoint de cette épuration ou vers une unité de traitement spécifique lorsque le procédé n'est pas mis en oeuvre de manière intégrée avec une épuration humide des fumées de combustion,
c) la répartition du filtrat provenant de la deshydratation suivant b ci-dessus est régulée de manière à maintenir un niveau constant dans le bac de lavage
d) la composition et la quantité du ou de chaque liquide de rinçage sont choisies en fonction des caractéristiques des résidus à traiter de manière à rincer la surface de ces résidus, en particulier pour solubiliser transitoirement et entraîner des composés non facilement solubles déposés en surface sur les résidus à traiter.

### DESCRIPTION DETAILLEE DE L'INVENTION

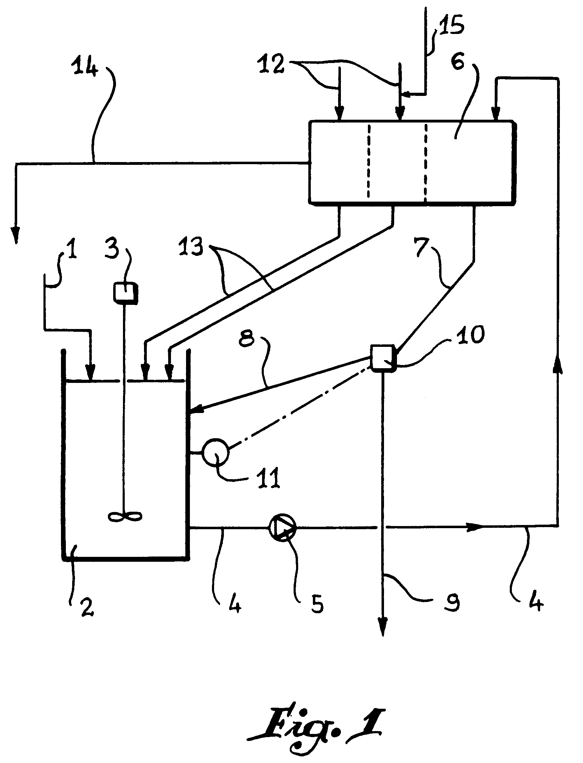

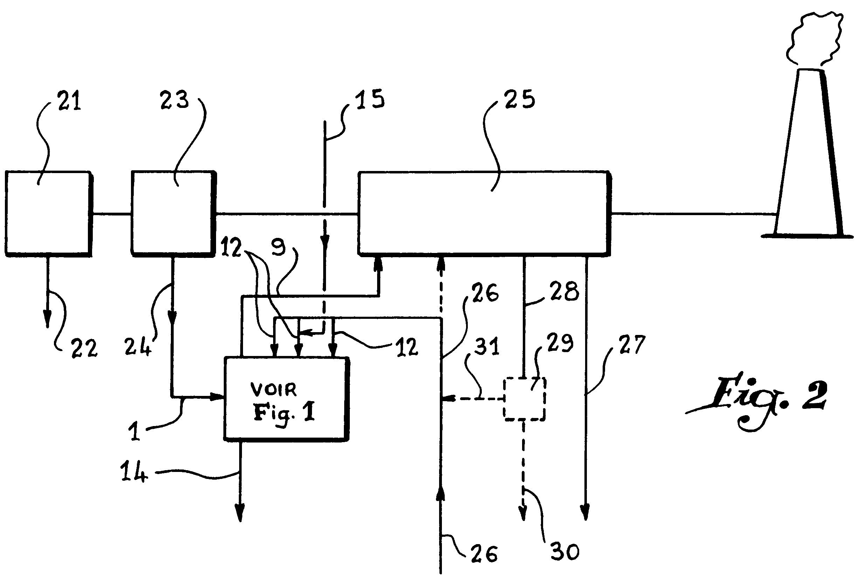

Une meilleure compréhension de l'invention peut être obtenue maintenant grâce à la description détaillée suivante en liaison avec la figure 1 qui donne une représentation schématique du procédé objet de l'invention.

Les résidus à traiter (1) sont introduits dans un bac de lavage (2) pouvant être équipé d'un dispositif d'agitation (3) et contenant le liquide de lavage dont le niveau est mesuré par un dispositif de mesure de niveau (11). Après contact avec le liquide de lavage les résidus lavés sont extraits du bac de lavage par une pompe (5) envoyant sur un dispositif de deshydratation (6) un débit constant de suspension (liquide + résidus lavés) (4). Cette suspension est deshydratée dans une première partie du dispositif de deshydratation (6). Le filtrat (7) qui en résulte est réparti en un débit principal (8) dirigé vers le bac de lavage (2) et un débit secondaire (9). Cette répartition est réalisée par un organe de réglage (10) piloté par le signal du dispositif de mesure de niveau (11) de manière à maintenir le niveau constant dans le bac de lavage (2). Le débit secondaire (9) est envoyé dans l'épuration humide des fumées (non représentée sur la figure 1) en remplacement de la totalité ou d'une partie de l'eau d'appoint de ladite épuration des fumées ou vers une unité de traitement spécifique lorsque le procédé n'est pas mis en oeuvre de manière intégrée avec une épuration humide des fumées. Le dispositif de réglage (10) peut être une vanne de réglage ou un dispositif de trop plein ou tout autre dispositif approprié.

Après cette deshydratation dans une première partie du dispositif de deshydratation (6) les résidus sont rincés dans une ou plusieurs zones distinctes avec un ou plusieurs liquides de rinçage (12). Le ou les filtrats (13) sont renvoyés en totalité dans le bac (2). Les résidus traités (14) sont alors extraits du dispositif de deshydratation (6).

Une réalisation préférée du dispositif de deshydratation (6) est un filtre à tambour avec filtration sous vide car il permet facilement de déterminer différentes zones de deshydratation et de rinçage. Mais d'autres dispositifs peuvent être utilisés comme par exemple les filtres à bandes presseuses.

De manière surprenante cette méthode de lavage avec un liquide chargé en sels dissous est généralement favorable à la mise en solution des éléments trâce ; mais si ce seul lavage en solution concentrée était réalisé il resterait une eau intersticielle induisant une fraction soluble importante. Dans l'invention le rinçage associé élimine cet inconvénient. On peut utiliser de l'eau pour un tel rinçage.

Mais un tel rinçage à l'eau resterait insuffisant - s'il est réalisé avec une faible quantité d'eau - dans le cas de composés, non facilement solubles, déposés en surface sur les résidus à traiter et présents en quantité bien supérieure à celle d'éléments trâce. C'est le cas par exemple du sulfate de Calcium qui est formé dans la combustion par sulfatation superficielle des cendres volantes. Il s'agit d'un composé qui présente une solubilité moyenne d'environ 2 g/l et il est souvent nécessaire de l'éliminer pour que la fraction soluble des résidus reste faible. Suivant une des caractéristiques de l'invention, cette solubilité peut être transitoirement augmentée en utilisant par exemple sur le deuxième rinçage une adjonction (15) d'acide chlorhydrique qui permet de solubiliser ce sulfate de calcium non seulement sous forme d'ions Ca⁺⁺ et SO₄⁻⁻ (limité par le produit de solubilité du sulfate de calcium) mais aussi sous forme de Ca⁺⁺ et de HSO₄⁻ (d'autant plus importante que le PH est faible). Ceci n'est pas possible dans un lavage classique sans adjonction de quantité très importante d'acide neutralisant le potentiel basique des résidus à traiter. Suivant une caractéristique préférée de l'invention ce rinçage acide est réalisé en couche mince dans le dispositif de deshydratation qui lui-même est réalisé en couche mince. Un tel arrangement permet alors la dissolution transitoire du sulfate de calcium superficiel avec une faible consommation d'eau et une faible consommation d'acide. Suivant les caractéristiques superficielles des résidus à traiter, d'autres additifs (15) peuvent être ajoutés à l'eau du deuxième rinçage de manière à transférer certains composés présents superficiellement sur les résidus lavés dans ledit liquide de rinçage soit à l'état d'élément dissous soit par adsorption précipitation sur de fines particules en suspension dans ledit liquide de rinçage, par exemple dans le cas du sulfate de calcium précédement décrit on peut utilement suivant l'invention injecter dans le liquide de rinçage une fine poudre de carbonate de calcium dont la solubilisation est lente et permet la précipitation du sulfate de calcium dissous.

La figure 2 montre la mise en oeuvre du procédé dans la variante préférée qui est celle d'une mise en oeuvre intégrée avec une épuration humide des fumées de combustion. En aval de la combustion (21) elle-même (four et chaudière) où sont récupérés les mâchefers (22), on trouve souvent un électrofiltre (23) assurant la captation des cendres volantes (24) suivi d'une épuration humide des fumées (25) dont la partie traitement de l'effluent fourni les composés captés sous forme d'une part d'un résidu solide (27) (en général appelé gâteau de filtration) et d'autre part d'une eau claire (28) contenant des sels neutres (chlorure de calcium, chlorure de sodium ...). Dans certains cas cette eau claire est évaporée (29), pour produire un sel (30), réutilisable dans l'industrie chimique par exemple, et de l'eau (31) réutilisable en substitution de l'eau d'appoint (26) de l'épuration humide. Suivant l'invention les mâchefers (22) (éventuellement après traitement mécanique non représenté) ou les cendres volantes (24) sont envoyés dans le bac de lavage (2) et sont soumis au traitement suivant l'invention tel que décrit dans la figure 1. Une partie ou la totalité de l'eau d'appoint (y compris l'eau (31) provenant de l'évaporation (29) éventuelle) est d'abord utilisée pour le ou les rinçage(s) (12) et le débit secondaire (9) est envoyé comme eau d'appoint dans l'épuration humide (25). La conception de l'épuration humide (25) est adaptée suivant les règles de l'art à l'utilisation d'eau chargée en composés sous forme dissoute et sous forme particulaire.

Pour faciliter la lecture, il n'a été représenté sur la figure 2 que le traitement suivant l'invention des cendres volantes (24). Un schéma identique non représenté s'applique aussi à celui des mâchefers (22) qui peut demander un pré-traitement mécanique suivant les règles de l'art.

## Revendications

1. Procédé pour le traitement de résidus (1) provenant d'une combustion et/ou de l'épuration des fumées de cette combustion, du genre comportant une première étape de lavage avec un liquide acqueux dans un bac de lavage agité (2), une deuxième étape de déshydratation avec un dispositif de déshydratation (6) et une troisième étape avec au moins un rinçage dans le dispositif de déshydratation (6) précité, caractérisé en ce que :
a - le ou les liquides(s) de rinçage (12) sont dirigés, après utilisation dans le dispositif de déshydratation (6), vers le bac de lavage (2) ;
b - le filtrat (7) provenant de la déshydratation des résidus lavés est principalement dirigé (8) vers le bac de lavage (2), tandis que la partie restante (9) est envoyée soit vers l'épuration humide des fumées de combustion (25) en substitution à l'eau d'appoint (26) de cette épuration, soit vers une unité de traitement spécifique lorsque le procédé n'est pas mis en oeuvre de manière intégrée avec une telle épuration humide ;
c - la répartition du filtrat provenant de la déshydratation suivant (b) est régulée (en 10) de manière à maintenir un niveau constant dans le bac de lavage (2) ;
d - la composition et la quantité du ou de chaque liquide de rinçage (12) sont choisies en fonction des caractéristiques des résidus à traiter (1), de manière à rincer la surface de ces résidus, notamment en vue de solubiliser transitoirement et entraîner les composés non facilement solubles déposés en surface sur lesdits résidus.

2. Procédé suivant la revendication 1, caractérisé en ce que des additifs (15) sont injectés dans l'un au moins des liquides de rinçage (12) afin d'adapter sa composition aux caractéristiques des résidus à traiter (1).

3. Procédé suivant l'une quelconque des revendications 1 et 2, caractérisé en ce qu'on opère trois rinçages successifs, une adjonction d'acide chlorhydrique (15) étant prévue dans le deuxième rinçage, ce rinçage acide étant réalisé en couche mince dans le dispositif de déshydratation (6) lui-même réalisé en couche mince.

4. Procédé suviant l'une quelconque des revendications 2 et 3, caractérisé en ce que l'un des additifs injectés (15) dans l'un des liquides de rinçage (12) est constitué par un solide finement divisé, cette injection étant effectuée immédiatement avant utilisation dudit liquide de rinçage (12) dans le dispositif de déshydratation (6).

## Claims

1. A method for the treatment of residues (1) from combustion and/or from the purification of the flue gases of this combustion, of the type comprising a first, washing, stage with an aqueous liquid in a stirred washing tank (2), a second, dehydration, stage with a dehydration device (6) and a third stage with at least one rinsing operation in the afore-mentioned dehydration device (6), characterised in that:
a - the rinsing liquid(s) (12), after use in the dehydration device (6), are sent to the washing tank (2);
b - the filtrate (7) from the dehydration of the washed residues is mainly sent (8) to the washing tank (2), whereas the remaining part (9) is sent either to the wet purification of the combustion flue gases (25) as a substitution for the make-up water (26) of this purification or to a specific treatment unit when the method is not used integrally with such wet purification;
c - the distribution of the filtrate coming from the dehydration according to (b) is regulated (at 10) so as to maintain a constant level in the washing tank (2);
d - the composition and the quantity of the rinsing liquid or of each rinsing liquid (12) are selected according to the characteristics of the residues to be treated (1), so as to rinse the surface of these residues, in particular with the aim of transitorily solubilising and entraining those compounds which are not readily soluble which have been deposited on the surface of said residues.

2. A method according to Claim 1, characterised in that additives (15) are injected into at least one of the rinsing liquids (12) in order to adapt the composition thereof to the characteristics of the residues to be treated (1).

3. A method according to any one of Claims 1 and 2, characterised in that three successive rinsing operations are effected, provision being made for the addition of hydrochloric acid (15) during the second rinsing operation, this acid rinsing being effected in a thin layer in the dehydration device (6) which itself is made in a thin layer.

4. A method according to any one of Claims 2 and 3, characterised in that one of the additives (15) injected into one of the rinsing liquids (12) is formed by a finely divided solid, this injection being effected immediately before use of said rinsing liquid (12) in the dehydration device (6).

## Patentansprüche

1. Verfahren zur Behandlung von Rückständen (1), welche aus einem Verbrennungsprozess und/oder aus der Rauchgasreinigung dieses Verbrennungsprozesses stammen, und welches gattungsgemäß einen ersten Wäscherschritt mit einer Flüssigkeit beinhaltet, die in einem Waschbehälter (2) bewegt wird, und einem zweiten Dehydratisierungsschritt mit einer Dehydrationsvorrichtung (6) und einem dritten Schritt mit wenigstens einer Spülung in der Dehydrationsvorrichtung (6) wie oben näher erwähnt, **dadurch gekennzeichnet** dass:
a - die oder die Flüssigkeit(en) der Spülung (12), nach dem Gebrauch in der Dehydrationsvorrichtung (6) in den Waschbehälter (2) geleitet werden;
b - das Filtrat (7), welches aus der Dehydration der gewaschenen Rückstände stammt, vorzugsweise in den Waschbehälter (2) geleitet wird, während der Teilrückstand (9) entweder zu dem Nasswäscher der Rauchgasreinigung (25) der Verbrennung in Austausch von Zusatzwasser (26) dieser Waschung geleitet wird, oder es wird zu einer Einheit einer Spezial-Behandlung geleitet, wenn das Verfahren nicht die integrierte Art und Weise mit einer solchen Nassreinigung beinhaltet;
c - die Verteilung des Filtrats, welches aus der Dehydration gemäß (b) stammt, in der Art und Weise reguliert wird (in 10), um ein konstantes Niveau in dem Waschbehälter (2) zu halten;
d - die Zusammensetzung und die Menge der oder jeder Flüssigkeitsspülung (12) in der Funktion der charakteristischen Rückstände zur Behandlung (1) gewählt werden, in der Art und Weise um die Oberfläche dieser Rückstände zu spülen, insbesondere im Hinblick darauf, die nicht leicht löslichen Komponenten vorübergehend aufzulösen und mitzureissen, welche an der Oberfläche der besagten Rückstände gelagert sind.

2. Verfahren nach Anspruch 1, **dadurch gekennzeichnet**, dass Additive (15) in wenigstens eine der Flüssigkeitsspülungen (12) injiziert werden, um ihre Zusammensetzung an die Charakteristiken der zu behandelnden Rückstände anzupassen.

3. Verfahren gemäß einem der Ansprüche 1 und 2, **dadurch gekennzeichnet**, dass man mit drei aufeinanderfolgenden Spülungen arbeitet, wobei ein Zusatz von Salzsäure (15) bei der zweiten Spülung vorgesehen wird, und wobei diese saure Spülung in einer Dünn-Schicht in der Dehydrationsvorrichtung (6) erfolgt, die selbst als eine Dünn-Schicht ausgebildet ist.

4. Verfahren nach einem der Ansprüche 2 und 3, **dadurch gekennzeichnet**, dass eines der injizierten Additive (15) in eine der Flüssigkeitsspülungen (12) aus einem feinverteilten Festkörper besteht, wobei diese Injektion unmittelbar vor dem Gebrauch dieser Flüssigkeitsspülung (12) in der Dehydrationsvorrichtung (6) durchgeführt wird.
